# FASCICULE DE BREVET EUROPEEN

(11) **EP 2 819 807 B1**
(45) Date de publication et mention de la délivrance du brevet: **13.04.2016**
(21) Numéro de dépôt: 13711081.3
(22) Date de dépôt: 28.02.2013
(51) Int. Cl.: B23Q 35/26

(54) **DISPOSITIF D'ORIENTATION POUR ORIENTER UN ORGANE PALPEUR**
AUSRICHTUNGSVORRICHTUNG ZUM AUSRICHTEN EINER SENSORSONDE
ORIENTATION DEVICE FOR ORIENTATING A SENSOR PROBE

(30) Priorité: 02.03.2012 FR 1251955
(43) Date de publication de la demande: 07.01.2015
(73) Titulaire: GAZTRANSPORT ET TECHNIGAZ, 78470 Saint Rémy lès Chevreuse (FR)
(72) Inventeur: MENARD, Georges, F-44600 Saint Nazaire (FR); LECOURTOIS, Pierre, F-78460 Chevreuse (FR); LAURAIN, Nicolas, F-91640 Briis sous Forges (FR); DELETRE, Bruno, F-78000 Versailles (FR)
(74) Mandataire: Loyer & Abello
(86) Numéro de dépôt international: PCT/FR2013/050426
(87) Numéro de publication internationale: WO 2013/128135

(56) Documents cités:
- DE-A1- 2 514 415
- FR-A1- 2 701 415

## Description

L'invention se rapporte au domaine des outils de mesure mécanique de la normale d'une surface. Par exemple, la présente invention concerne des outils de suivi de normale d'une surface pour le guidage d'outils de travail par rapport à la surface.

Des outils de suivi de normale d'une surface peuvent être utilisés dans le cas du guidage d'une torche de soudage pour le soudage de plaques métalliques, par exemple, pour la réalisation d'une paroi de cuve étanche.

Une telle cuve étanche est obtenue en assemblant par soudage des pièces métalliques qui présentent un profil commun. FR2701415 décrit une machine automatique qui est capable de réaliser des soudures suivant le profil commun aux pièces métalliques pour réaliser une telle paroi de cuve.

Une telle machine comporte un support fixe par rapport aux pièces à assembler. Un charriot est monté sur ce support fixe et se déplace selon une trajectoire d'avance. Ce charriot porte une torche de soudage qui peut réaliser des points ou des cordons de soudure. Cette torche est mobile en rotation et en translation par rapport au robot. La mobilité en rotation et en translation de la torche est commandée, par un dispositif de commande. Ce dispositif de commande est lui-même connecté à des moyens de détection sur le charriot qui mesurent la position de la torche par rapport à la surface. Le dispositif de commande transmet des signaux de commande à des actionneurs en fonction de la position transmise par les moyens de détection. A partir de ces signaux de commande, ces actionneurs orientent et positionnent la torche par rapport aux pièces métalliques.

Les moyens de détection précités peuvent être, par exemple, un télémètre laser, un détecteur inductif ou un détecteur capacitif. Toutefois, ce type de machine automatique nécessite des moyens de calcul pour déterminer la tangente au profil et ainsi orienter la torche de soudage en fonction de cette tangente. De plus, ces types de moyens de détection sont onéreux et peuvent même être sensibles aux perturbations électromagnétiques.

DE-U-2514415 décrit une sonde de reproduction pour une fraiseuse qui comporte une tige de fixation, une sonde montée à pivotement sur celle-ci et une butée sur l'extrémité libre de la sonde.

Selon un mode de réalisation, l'invention fournit un dispositif d'orientation pour orienter un organe palpeur par rapport au vecteur normal local d'une surface de travail, le dispositif comportant :
un bâti,
un élément de support mobile lié au bâti et apte à coulisser dans une direction prédéterminée par rapport au bâti,
un organe palpeur apte à pivoter selon un axe de rotation non parallèle à la direction prédéterminée par rapport à un point d'articulation de l'élément de support,
des moyens de pression aptes à déplacer et générer un effort sur l'élément de support mobile dans ladite direction prédéterminée de manière à plaquer l'organe palpeur contre la surface de travail,
dans lequel l'organe palpeur comporte une surface de palpation externe convexe unique apte à être mise en contact avec la surface de travail, la surface de palpation présentant un unique point de contact d'équilibre, le point de contact d'équilibre étant le point sur la surface de palpation le plus proche du point d'articulation

Selon des modes de réalisation, un tel dispositif d'orientation peut comporter une ou plusieurs des caractéristiques suivantes.

Selon un mode de réalisation l'organe palpeur est uniquement apte à pivoter selon l'axe de rotation.

Selon un mode de réalisation, la surface de palpation présente une forme de révolution autour d'un axe de révolution parallèle à l'axe de rotation, l'axe de révolution étant espacé de l'axe de rotation.

Selon un mode de réalisation, l'organe palpeur comporte :
une manivelle comprenant une première partie liée de manière pivotante au point d'articulation de l'élément de support et définissant l'axe de rotation et une deuxième partie parallèle à la première partie et décalée de la première partie pour définir l'axe de révolution, et
un galet présentant la surface de palpation, le galet étant apte à pivoter par rapport à la deuxième partie de la manivelle pour rouler sur la surface de travail.

Selon un mode de réalisation, l'organe palpeur est apte à pivoter selon un second axe de rotation non parallèle à la direction prédéterminée par rapport au point d'articulation de l'élément de support, le second axe de rotation étant perpendiculaire au premier axe de rotation.

Selon un mode de réalisation, l'articulation entre l'organe palpeur et l'élément de support est une rotule.

Selon un mode de réalisation, la surface de palpation est sensiblement de la forme d'une calotte sphérique présentant un centre espacé du point d'articulation.

Selon un mode de réalisation, le dispositif comporte en outre un premier élément de mesure d'angle et un second élément de mesure d'angle aptes chacun à mesurer un déplacement angulaire autour des premier et second axes de rotation respectifs de l'organe palpeur par rapport à une position de référence respective,
et l'organe palpeur comporte une surface de mesure de forme d'une seconde calotte sphérique centrée sur le point d'articulation,
les deux éléments de mesure d'angle comportant chacun une tige de mesure présentant une surface de révolution cylindrique en contact avec la surface de mesure, chaque tige de mesure étant apte à pivoter selon un des axes de rotation lors de la rotation de l'organe palpeur.

Selon un mode de réalisation, la direction prédéterminée de coulissement de l'élément de support mobile est sensiblement perpendiculaire à la surface de travail.

Selon un mode de réalisation, le dispositif comporte en outre un rail de guidage destiné à être agencé le long de la surface de travail, le bâti étant monté de manière mobile sur le rail de guidage.

Selon un mode de réalisation, le dispositif comporte en outre un organe suiveur lié à l'organe palpeur, le bâti comportant des moyens de plaquage aptes à plaquer l'organe suiveur sur une surface de décrochement séparant deux parties de la surface de travail, l'organe suiveur étant solidaire de l'organe palpeur de manière à pivoter lors du pivotement de l'organe palpeur et de manière à maintenir l'organe palpeur à une distance prédéterminée de la surface de décrochement.

Selon un mode de réalisation, le dispositif comporte des moyens pour déplacer l'organe de palpation selon la direction de coulissement, une direction d'avance et une direction de plaquage, , chacune des direction d'avance et direction de placage étant perpendiculaire à la direction de coulissement, les moyens de placage étant aptes à plaquer l'organe suiveur selon la direction de plaquage et la direction d'avance étant perpendiculaire à la direction de placage.

Selon un mode de réalisation, le bâti comporte, en outre, un capteur de position apte à mesurer la distance entre le bâti et la surface de travail.

Selon un mode de réalisation, le dispositif comporte en outre un élément de mesure d'angle apte à mesurer un déplacement angulaire autour de l'axe de rotation de l'organe palpeur par rapport à une position de référence.

Selon un mode de réalisation, l'élément de mesure d'angle est choisi parmi les potentiomètres électriques, les télémètres optiques, les télémètres mécaniques, les codeurs incrémentaux, les capteurs inductifs, les comparateurs et les capteurs de triangulation optique.

Selon un mode de réalisation, l'élément de mesure d'angle comporte un arbre entrainé en rotation par la rotation de l'organe palpeur autour de l'axe de rotation par l'intermédiaire d'un accouplement choisi dans le groupe comprenant les accouplements flexibles, les accouplements directs, les accouplements par trains d'engrenage, les accouplements par courroie crantée et les accouplements par système de balancier.

Selon un mode de réalisation, l'élément de mesure d'angle comporte un télémètre agencé de manière à détecter la position d'une surface supérieure du galet opposée à la surface de palpation dans le référentiel de l'élément de support mobile.

Selon un mode de réalisation, l'élément de mesure d'angle comporte une came liée à l'organe palpeur pour pivoter solidairement avec l'organe palpeur selon l'axe de rotation et un télémètre agencé de manière à détecter la position d'une surface de la came dans le référentiel de l'élément de support mobile.

Selon un mode de réalisation, le dispositif comporte en outre un outil de traitement de la surface de travail apte à pivoter autour de l'axe de rotation en fonction du pivotement de l'organe palpeur.

Selon un mode de réalisation, l'organe palpeur est uniquement apte à pivoter selon l'axe de rotation, la surface de palpation présentant une forme de révolution autour d'un axe de révolution parallèle à l'axe de rotation, l'axe de révolution étant espacé de l'axe de rotation, l'organe palpeur comportant une manivelle comprenant une première partie liée de manière pivotante au point d'articulation de l'élément de support et définissant l'axe de rotation et une deuxième partie parallèle à la première partie et décalée de la première partie pour définir l'axe de révolution, et dans lequel la première partie de la manivelle comporte un support et l'outil de traitement est lié de manière solidaire au support pour pivoter avec la manivelle.

Selon un mode de réalisation le dispositif comporte en outre un capteur de distance apte à mesurer une distance par rapport à la surface de travail, le capteur étant agencé en point du dispositif situé en amont du point de contact entre la surface de travail et la surface de palpation externe, selon une direction d'avance.

Une idée à la base de l'invention est de déterminer la normale d'une surface mesurée directement en un point de la surface mesurée en plaquant une surface de palpation convexe articulée sur la surface mesurée, la surface convexe étant articulée en un point excentré du centre de courbure de la surface convexe.

Certains aspects de l'invention partent de l'idée de réaliser la mesure de la normale de la surface le long d'une trajectoire de manière continue en réalisant une surface de palpation cylindrique apte rouler autour de l'axe du cylindre pour évoluer le long de la surface mesurée et apte à pivoter selon un axe excentrée par rapport à l'axe du cylindre pour déterminer la normale de la surface mesurée.

Certains aspects de l'invention partent de l'idée de déterminer la normale d'une surface selon trois directions en permettant la rotation selon trois degrés de liberté de la surface de palpation.

Certains aspects de l'invention partent de l'idée d'orienter un outil en fonction de la normale de la surface mesurée, la normale étant mesurée en un point voisin de la zone d'effet de l'outil.

Certains aspects de l'invention partent de l'idée d'exercer un effort de plaquage sur la surface mesurée dans la direction de la normale de la surface mesurée au point de contact avec la surface convexe en exerçant un effort sur la surface convexe.

Certains aspects de l'invention partent de l'idée de réaliser un dispositif de mesure de normale d'une surface permettant de mesurer la normale d'une surface mesurée de manière simple, économique, robuste et en temps réel.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une vue schématique pour deux positions d'un chariot palpeur évoluant sur un rail de guidage.
- La figure 2 est une vue en perspective éclatée d'un galet plan pouvant être mis en oeuvre sur le chariot palpeur de la figure 1.
- La figure 3 est une vue partielle en perspective du palpeur du chariot de palpeur de la figure 1 comportant le galet de la figure 2
- Les figures 4 à 6 sont des vues partielles en perspective de trois variantes du palpeur pouvant être mis en oeuvre sur le chariot palpeur de la figure 1.
- La figure 7 est une vue partielle en perspective du palpeur de la figure 5 associé à un outil de soudage.
- La figure 8 est une vue partielle en perspective du palpeur équipé d'un galet de guidage latéral.
- La figure 9 est une vue de côté d'un palpeur tridimensionnel.
- La figure 10 est une vue en coupe du palpeur tridimensionnel de la figure 9.
- La figure 11 représente un autre mode de réalisation du chariot palpeur.
- Les figures 12 à 14 sont des vues analogues à la figure 3 montrant d'autres modes de réalisation du palpeur muni d'un dispositif de conversion.

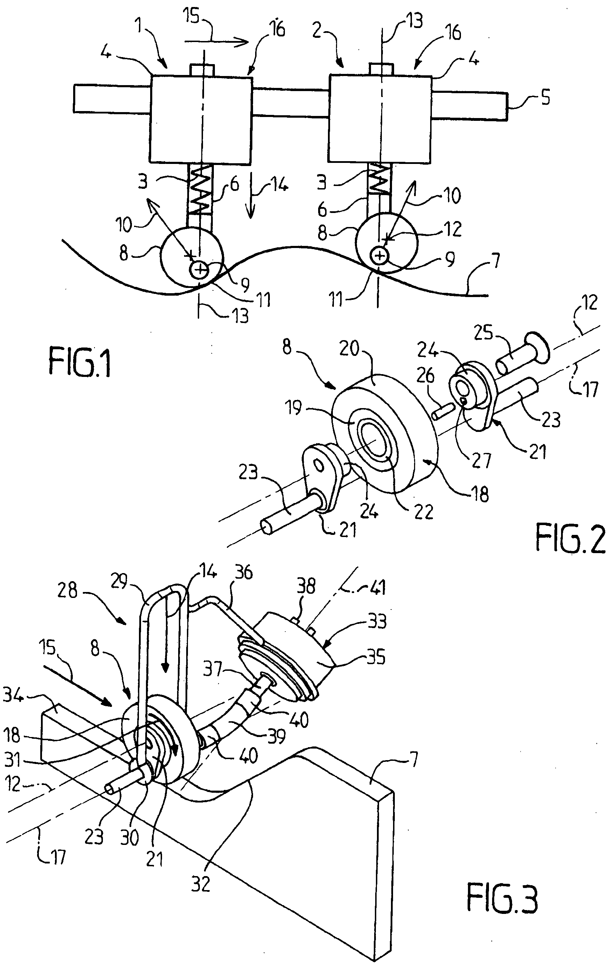

La figure 1 présente un chariot palpeur 16 évoluant sur un rail de guidage 5 au-dessus d'une surface mesurée 7. Le chariot palpeur 16 est représenté sur la figure 1 dans deux positions 1 et 2 correspondant à deux positions successives atteintes par le chariot palpeur 16 lors de son évolution sur le rail de guidage 5 selon une direction d'avance 15 définie par l'orientation du rail du guidage 5.

Le chariot palpeur 16 comporte un bâti 4 dans lequel des actionneurs peuvent mettre en mouvement un pignon. Le pignon est en prise avec une crémaillère solidaire du rail 5. Cette crémaillère s'étend dans la direction du rail 5. Ainsi, lorsque les actionneurs entrainent en rotation le pignon, celui-ci coopère avec la crémaillère pour provoquer le déplacement du chariot palpeur 16 selon la direction d'avance 15. L'entraînement peut aussi être réalisé par courroie crantée, câble, roulage avec plaquage, vérin ou moteur linéaire.

Un bras d'appui 6 est monté coulissant par rapport au bâti 4 du chariot palpeur 16 selon un axe de coulissement 13 perpendiculaire à la direction d'avance 15. Un ressort 3 comprimé entre le bâti 4 et un bras d'appui 6 presse un galet 8 lié à l'extrémité du bras d'appui 6 sur la surface mesurée 7. Le placage du galet 8 sur la surface 7 est ainsi réalisé selon une direction d'appui 14 parallèle à la direction de coulissement 13.

Le galet 8 présente une surface externe circulaire dont le centre correspond à un axe de roulement 12 et est relié au bras d'appui 6 par l'intermédiaire d'un pivot 9. Le pivot 9 permet donc la rotation du centre du galet 8 par rapport au bras d'appui 6 autour d'un axe de pivotement 17. L'axe de pivotement 17 du pivot 9 est excentré par rapport au centre de la surface circulaire du galet 8. Lorsque le bras d'appui 6 exerce une pression sous la contrainte du ressort 3 sur le galet 8, le centre du galet 8 pivote, en raison de la force de réaction exercée par la surface mesurée 7 en un point de contact 11 de sa surface externe circulaire, autour de l'axe de pivotement 17. Ce pivotement est provoqué jusqu'à ce que le point de contact 11 corresponde à un point d'équilibre. Le centre du galet 8 adopte alors une orientation 10 par rapport à l'axe 17 qui correspond à la normale locale de la surface mesurée 7 au point de contact 11 entre le galet 8 et la surface mesurée 7. L'orientation 10 par rapport à l'axe de pivotement 17 du galet 8 correspond à la demi-droite formée par l'axe de pivotement 17 et le centre du galet 8 dans un plan perpendiculaire à l'axe de pivotement 17.

Plus précisément, lorsque le bras 6 appuie le galet 8 contre la surface mesurée 7 et lorsque le point de contact 11 n'est pas dans la position d'équilibre, la contrainte exercée au niveau du pivot 9 et la réaction exercée par la surface mesurée au point de contact 11 du galet 8 sur sa surface génèrent un moment qui provoque la rotation du galet autour du pivot 9.

Ainsi dans la position initiale 1, le galet 8 est orienté selon la normale à la surface mesurée 7. Comme la surface 7 présente une pente ascendante par rapport à la direction d'avance 15, l'orientation 10 du galet 8 dans la position initiale 1 comporte une composante opposée à la direction d'avance 15. Lorsque le chariot palpeur 16 avance jusqu'à une position finale 2, le galet 8 reste plaqué contre la surface mesurée 7 par le ressort 3. Le galet 8 roule ou glisse contre la surface mesurée 7 jusqu'à la position finale 2 et l'orientation du galet 10 varie progressivement pour atteindre l'orientation 10 du galet 8 représentée sur la position finale 2. L'orientation 10 finale présente une composante orientée selon la direction d'avancement 15 car la pente de la surface mesurée 7 est descendante par rapport à la direction d'avance 15. Entre la première position 1 et la deuxième position 2, l'élévation du niveau de la surface mesurée 7 par rapport au bâti 4 provoque le coulissement du bras d'appui 6 vers le haut et donc la compression du ressort 3. La baisse du niveau de la surface mesurée 7 provoque ensuite le coulissement du bras d'appui 6 vers le bas et donc la détente du ressort 3 jusqu'à la deuxième position 2.

Lors du déplacement du chariot palpeur 16, un circuit électronique non représenté peut mesurer le pivotement du galet 8 autour du pivot 9 et transmettre des signaux de commandes à un outil non représenté pour orienter cet outil par rapport à la surface mesurée 7. L'outil peut être par exemple un outil de soudage. Par ailleurs, le bâti 4 peut comporter un capteur de position pour mesurer la distance entre le bâti 4 et la surface mesurée 7, les signaux de commandes étant en outre générés en fonction de cette mesure de position.

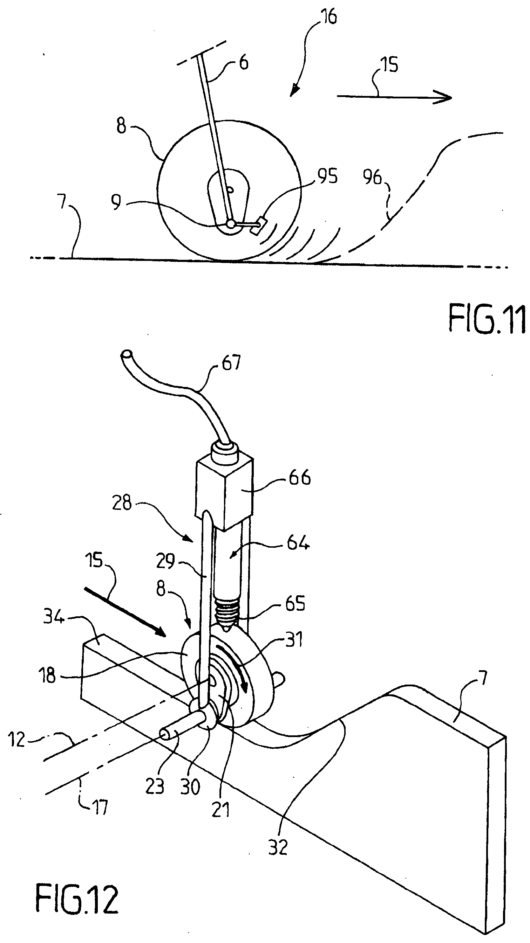

Dans le mode de réalisation de la figure 11, le chariot 16 comporte un transducteur 95 qui mesure la distance entre la surface mesurée 7 et le transducteur 95. Le transducteur 95 est placé en amont de la zone de soudage de l'outil de soudage en une position distante de quelques millimètres devant l'axe de pivotement 9 du galet 8. De cette manière, le transducteur 95 peut détecter une variation de la pente en amont du soudage selon la direction d'avance 15. La détection préalable de la variation de pente permet au chariot de définir des zones de changement de vitesse de travail de l'outil. En effet, lors du déplacement du chariot 16, une diminution de la distance mesurée signifie que le chariot 16, et donc l'outil associé, arrivent sur une pente ascendante 96. Le chariot 16 ralenti donc sa vitesse de soudage. Lorsque le chariot 16 est présent sur la pente ascendante 96, une augmentation de la distance mesurée signifie que l'outil arrive au sommet de la pente et la vitesse de soudage est modifiée en conséquence.

Dans le cas où la surface mesurée consiste en deux plaques superposées et formant une onde, un fonctionnement analogue peut être observé. Par symétrie, lorsque le chariot 16 a atteint le sommet de l'onde, le transducteur 95 détecte une augmentation de la distance. Lorsque l'outil atteint le pied de l'onde, le transducteur 95 détecte une diminution de la distance.

Cette mesure de la distance permet en outre au circuit électronique d'anticiper les variations de pente et de communiquer en conséquence des signaux de commande à l'outil de soudage pour anticiper un changement d'orientation de l'outil de soudage. Ainsi le transducteur 95 permet de faciliter les évolutions de vitesse de travail et de positionnement de l'outil de soudage, par exemple en ralentissant la marche avant chaque changement de pente significatif

Les figures 2 et 3 présentent plus en détail respectivement le galet 8 et un palpeur 28 pouvant être mis en place sur le chariot palpeur 16 et comportant le galet 8.

La figure 2 est une vue éclatée du galet 8. Le galet 8 comporte une roue 18 présentant une bande de roulement 20 plane et dans laquelle un roulement à billes 19 est monté coaxialement par rapport à la bande de roulement 20. Deux manivelles 21 sont montées chacune d'un côté de la bague intérieure 22 du roulement à billes 19. Ces deux manivelles 21 permettent la rotation de l'ensemble formé par la roue 18 et les manivelles 21 autour de l'axe de pivotement 17. Le roulement à billes 19 permet quant à lui la rotation de la roue 19 par rapport aux manivelles 21 autour d'un axe de roulement 12 excentré par rapport à l'axe de pivotement 17. De cette manière, en revenant à la figure 1, la roue peut rouler sur la surface mesurée 7 indépendamment du pivotement du galet 8 lors du déplacement du chariot palpeur 16.

A cet effet, chacune des manivelles 21 comporte un arbre de pivot 23 et un maneton 24 maintenu excentré par rapport à l'arbre pivot 23. Les manetons 24 sont centrés et s'étendent selon l'axe de roulement 12, et les arbres pivot 23 sont coaxiaux par rapport à l'axe de pivotement 17.

Les manetons 24 sont montés avec un ajustement serré dans l'alésage de la bague intérieure 22 du roulement à billes 19. Les deux manivelles 21 sont liées rigidement entre elles par une vis d'assemblage 25 qui serre les deux manivelles 21 chacune sur un côté de la bague intérieure 22 du roulement à bille 19 et une goupille d'indexage 26 positionnée à cheval dans des perçages 27 respectifs des deux manivelles 21. Ces perçages 27 sont orientés selon une direction parallèle à l'axe de roulement 12 pour lier la mobilité en rotation de deux manivelles 21 entre elles. L'ajustement serré des manivelles dans l'alésage du roulement à billes 18 permet de réduire les sollicitations sur la vis d'assemblage 25.

En référence à la figure 3, un palpeur 28 comprenant le galet 8 va maintenant être décrit. Le palpeur 28 comporte un support 29 en forme de U positionné selon un plan perpendiculaire à la direction d'avance du chariot 16.

Le support 29 en forme de U comporte, sur chaque extrémité des branches du U, un palier 30 qui supporte un arbre pivot 23 d'une des deux manivelles 21 dans une direction transversale par rapport à la direction d'avance 15 et la surface mesurée 7. De cette manière, le galet 8 peut pivoter autour de l'axe de pivotement 17 entre les branches du U grâce aux manivelles 21.

Le support 29 est fixé à un arbre d'appui 6 non représenté. L'arbre d'appui 6 exerce un effort sur le support 29 sous la contrainte du ressort 3 non représenté, selon la direction d'appui 14. Ainsi, le galet est plaqué contre la surface mesurée 7. Par ailleurs, le chariot 16 entraine le support 29 par l'intermédiaire du bras 6 selon la direction d'avance 15.

La figure 3 illustre le galet 8 plaqué sur une section 34 plane de la surface mesurée 7. Ainsi, celui-ci est orienté dans une direction parallèle aux branches du U du support 29, et donc parallèlement à la direction d'appui 14. Dans cette position, le point de contact est situé en dessous de l'axe de pivotement 17.

Lorsque le galet se déplace le long de la surface mesurée 7, la roue roule sur la surface mesurée 7 selon la rotation 31 autour de l'axe de roulement 12.

La surface mesurée 7 comporte une pente ascendante 32. Lorsque le galet 8 atteint la pente ascendante 32, celui-ci s'oriente automatiquement selon la normale de cette pente. Plus précisément, sous l'effet de la réaction de la surface mesurée 7 sur le galet 8, les manivelles 21 s'orientent en pivotant autour de l'axe de pivotement 17 dans les paliers 30. Ce pivotement s'effectue de manière à ce que la distance entre l'axe de pivotement 17 et le point de contact 11 entre la surface mesurée 7 et la bande de roulement 20 soit la minimum pour atteindre la position d'équilibre.

Un potentiomètre 33 est fixé à l'extrémité de l'un des arbres pivot 23 pour permettre la mesure du pivotement des manivelles 21.

Plus précisément, le potentiomètre 33 comporte un boitier 35 fixé au support 29 par un bras de fixation 36. Le potentiomètre comporte en outre un arbre de mesure 37 apte à tourner par rapport au boitier 35 autour d'un axe de rotation 41 qui n'est pas parallèle à la direction de pivotement 17. Un accouplement flexible constitué d'une partie flexible 39 solidaire de deux douilles rigides 40 est fixé entre les extrémités de l'arbre de mesure 37 et l'un des arbres pivot 23. De cette manière la rotation de l'arbre pivot 23 est transmise à l'arbre de mesure 37.

Un circuit électronique, non représenté, est connecté à des bornes 38 du potentiomètre 33 et mesure la variation de la caractéristique du potentiomètre 33 aux bornes 38 due à la rotation de l'arbre de mesure 37 par rapport à son boitier 35.

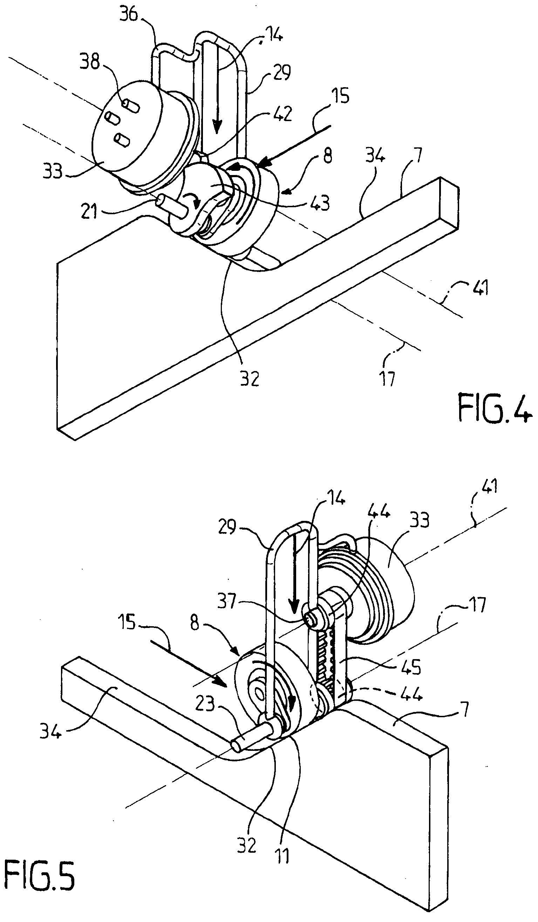

Dans d'autres modes de réalisation, le potentiomètre et l'arbre pivot peuvent être coaxiaux. Ainsi, le potentiomètre 33 peut être couplé de manière directe et rigide avec l'arbre pivot. D'autres alternatives de couplage entre le potentiomètre 33 et l'arbre pivot 23 sont illustrées dans les figures 4 à 6.

Sur la figure 4, on voit que l'axe de rotation 41 de l'arbre de mesure 37 est parallèle à l'axe de pivotement 17 de la manivelle 21. Un secteur denté 43, fixé à l'arbre pivot 23, transmet la rotation des manivelles 21 à un pignon 42 fixé sur l'arbre de mesure 37 du potentiomètre 33. L'arbre de mesure 37 est maintenu tournant dans le support 29 par un palier. Le secteur denté 43 présente un diamètre primitif supérieur au pignon 42 ce qui permet de multiplier la rotation de la manivelle 21 au niveau du pignon 42. De cette manière, le potentiomètre 33 et le circuit électronique associé peuvent mesurer de manière plus précise l'orientation du galet 8.

La figure 5 présente une autre alternative d'accouplement entre l'arbre pivot 23 et l'arbre de mesure 37. De manière analogue au mode de réalisation présenté en référence à la figure 4, l'axe de rotation 41 et l'axe de pivotement 17 sont parallèles et l'arbre de mesure 37 est supporté par un palier. Sur cette figure, l'arbre pivot 23 et l'arbre de mesure 37 comportent chacun un pignon 44 d'un même diamètre primitif situés dans un même plan perpendiculaire à l'axe de pivotement. Une courroie crantée 45 permet la transmission de la rotation du pignon 44 de l'arbre pivot 23 au pignon 44 de l'arbre de mesure 37.

Les figures 4 et 5 illustrent la position du galet 8 lorsque celui-ci est sur la pente ascendante 32 de la surface mesurée 7. Par contraste à la figure 3, celui-ci n'est plus orienté selon la direction des branches du support 29. En effet, le galet 8 adopte automatiquement une orientation 10 parallèle à la normale à la surface mesurée 7 au point de contact du galet 8 sur la surface mesurée 7 sous la contrainte de placage du bras 6. La pente ascendante 32 présente une pente de 45° par rapport à la section plane 34 de la surface mesurée. Ainsi, le galet adopte automatiquement une orientation 10 présentant un angle de 45° par rapport au support 29 et par rapport à la section plane 34. Par ailleurs, le point de contact 11 est situé en avant du support 29 dans la direction d'avance 15.

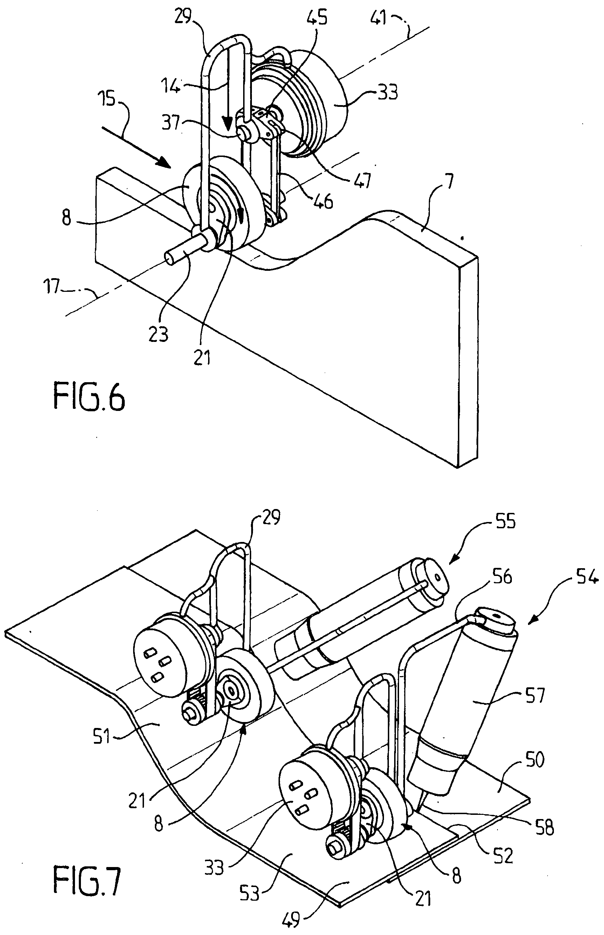

La figure 6 illustre un dispositif similaire aux figures 3 à 5 dans lequel le couplage est réalisé à l'aide d'un système de balancier. Pour cela, deux balanciers 47 sont respectivement fixés sur l'arbre pivot 23 de la manivelle 21 et sur l'arbre de mesure 37. Les balanciers 47 sont constitués d'un corps comportant un alésage traversé soit par l'arbre de mesure 37, soit par l'arbre pivot 23. Deux ailes s'étendent respectivement sur deux côtés opposés du corps selon une direction perpendiculaire à l'axe de l'alésage. Ces deux ailes comportent chacune une fente 45 qui s'étend dans l'aile selon un plan perpendiculaire à la direction de l'alésage. Chaque fente accueille une biellette 46 fixée de manière pivotante aux ailes du balancier. Ainsi, le système de balancier comporte deux biellettes 46 dont les extrémités sont chacune fixées à une aile de chacun des balanciers 47.

Ainsi, lors de son pivotement, l'arbre pivot 23 entraine la rotation du balancier 47 associé autour de la direction de pivotement. Cette rotation est transmise au balancier 47 associé à l'arbre de mesure 37 par l'intermédiaire des biellettes 46.

Les modes de couplage présentés en référence aux figures 4 à 6 permettent notamment de réduire d'encombrement du potentiomètre 33 au niveau de la surface mesurée 7.

Pour convertir l'orientation du galet 8 ou des manivelles 21 en un signal de mesure électrique, il existe d'autres possibilités que le potentiomètre 33. En référence aux figures 12 à 14, on va décrire maintenant trois autres modes de réalisation du dispositif de conversion. Les éléments identiques ou similaires à ceux de la figure 3 portent le même chiffre de référence que sur la figure 3 et ne sont pas décrits à nouveau.

Sur la figure 12, un palpeur mécanique 64 comporte un corps 66 fixé rigidement à l'extrémité supérieure des branches de support 29 entre celles-ci et une sonde mobile 65 maintenue élastiquement au contact de la roue 18 et apte à se translater axialement, parallèlement aux branches de support 29, par rapport au corps 66 en réponse aux changements d'orientation de la roue 18. Le corps 66 contient un organe de mesure de position qui convertit la position instantanée de la sonde 65 en un signal de mesure électrique qui est envoyé par exemple dans un câble de transmission 67 ou un système de transmission sans fil (non représenté). Ainsi, le signal de mesure produit par le palpeur mécanique 64 représente la distance entre le corps fixe 66 et l'intersection de l'axe de translation de la sonde 65 avec la surface supérieure de la roue 18. Cette distance est liée par une relation géométrique prédéterminée à l'angle d'inclinaison de la surface mesurée 7, au signe près. Pour la détermination du signe de l'inclinaison, un dispositif complémentaire peut être prévu.

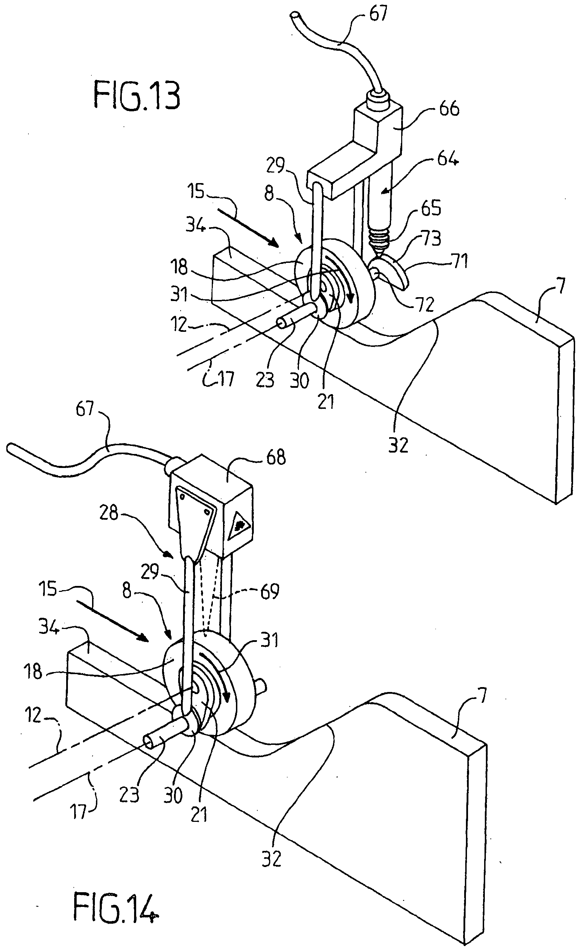

Le mode de réalisation de la figure 13 est très similaire. Dans ce cas, le palpeur mécanique 64 est décalé latéralement par rapport aux branches de support 29, en étant toujours orienté parallèlement à celles-ci. La sonde 65 est au contact d'une came 71 fixée sur une tige 72 solidaire des manivelles 21. La surface supérieure 73 de la came 71 est de préférence asymétrique de manière à pouvoir détecter le signe de l'inclinaison. Dans l'exemple représenté, la surface 73 est une portion de spirale imposant une cote axiale Z0 à la sonde 65 lorsque la surface est plane. Une inclinaison montante de la surface mesurée 7 se traduira par une cote mesurée Z>Z0 et une inclinaison descendante de la surface mesurée 7 se traduira par une cote mesurée Z<Z0, où Z est croissante en direction du corps 66.

Le palpeur mécanique 64 des figures 12 et 13 peut être remplacé par un dispositif optique de mesure de distance. Un mode de réalisation correspondant est représenté sur la figure 14. Dans ce cas, un télémètre optique 68 est fixé sur les branches de support 29 et projette un faisceau lumineux 69 sur la surface supérieure de la roue 18. Comme précédemment décrit, la mesure de distance entre le télémètre optique 68 et l'intersection du faisceau 69 avec la surface supérieure de la roue 18 permet de mesurer l'inclinaison de la surface mesurée 7 au signe près. Un agencement similaire peut être prévu avec la came 71 de la figure 13.

Bien que dans les modes de réalisation décrits ci-dessus, la normale à la surface est mesurée à l'aide d'un potentiomètre ou d'une mesure de distance et un outil de travail est orienté en fonction de cette mesure, l'invention n'est pas limitée à ceux-ci. Ainsi, le galet 8 peut être utilisé uniquement à titre d'inclinomètre ou pour directement orienter de manière rigide un outil de travail.

La figure 7 présente un tel dispositif qui est similaire à la figure 5 et dans lequel un outil de travail est directement orienté par le galet 8.

Le galet 8 évolue sur une surface de travail constituée d'une première plaque 49 métallique et d'une seconde plaque 50 métallique de formes similaires superposées sur une portion de leur côté. La surface de travail ainsi formée comporte donc un décrochement 52 entre la première plaque 49 et la seconde plaque 50.

Le dispositif est représenté sur cette figure pour deux positions 54 et 55. Une première position 54 correspond au placage du galet 8 sur une section horizontale 53 de la surface de travail, et une seconde position 55 correspond au placage du galet 8 sur une section ascendante 51 de la surface de travail.

Une torche à souder 57 et sa tête de travail 56 sont positionnées de biais dans un plan perpendiculaire à la direction d'avance 15 pour pointer la zone de décrochement 52 qui doit être soudée. Le chariot se déplace le long du décrochement 52, ce qui provoque le pivotement du galet 8 lorsque la normale à la surface change de direction.

Lors de la rotation de la manivelle 21, l'arbre pivot 23 entraine la rotation d'un support d'outil 56 fixé de manière rigide sur l'arbre pivot 23. Le support d'outil 56 entraine alors en rotation la torche à souder 57 fixée rigidement à celui-ci. Le support d'outil 56 oriente ainsi la tête de travail 58 en fonction de la normale de la surface de travail au point de contact 11. Ainsi, dans la première position 54, la torche de soudage 57 est orientée sensiblement selon la direction des branches du support 29, alors que dans la seconde position, celle-ci est orientée selon une direction perpendiculaire à la pente 51. De cette manière, la tête de travail 56 est automatiquement orientée selon une direction constante déterminée par rapport par rapport à la zone de soudage qu'elle vise.

De manière analogue, l'outil de travail peut être un marqueur laser, un outil d'usinage, un outil de découpe laser, ou un jet d'eau.

L'effort de plaquage exercé sur le galet 8 permet en outre de bien plaquer les deux plaques métallique l'une sur l'autre, et ainsi de réaliser un soudage de bonne qualité. De manière analogue, ce plaquage est avantageux dans le cadre du collage de deux pièces superposées et parcourues par le galet 8.

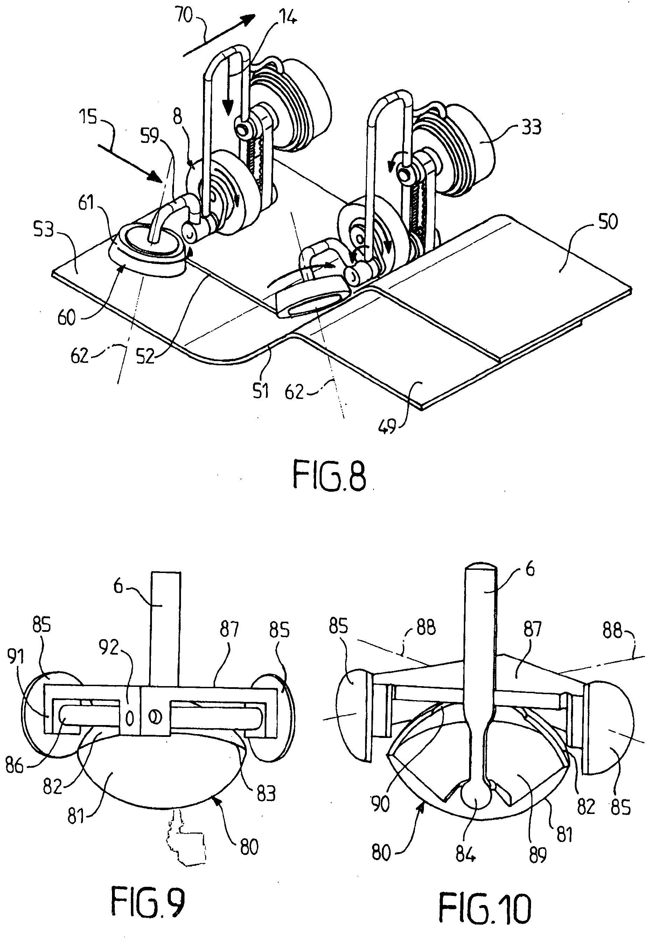

Les modes de réalisation présentés ci-dessus illustrent des dispositifs qui mesurent la normale d'une surface selon une direction rectiligne schématisée par la direction d'avance 15. Toutefois, ce dispositif peut mesurer la normale d'une surface sur une trajectoire non rectiligne. Par exemple, la figure 8 illustre un galet de guidage relié au palpeur 28 pour guider le palpeur selon la trajectoire du décrochement 52 présenté en référence à la figure 7.

En effet, le dispositif illustré sur la figure 8 est similaire au dispositif de la figure 7. Cependant, au lieu d'orienter rigidement un outil de travail, le galet oriente un galet suiveur 60.

En effet, un support de galet 59 est fixé de manière rigide sur la manivelle 23. Un galet suiveur 60 est monté pivotant sur le support de galet 59 selon un axe de rotation oblique 62 par rapport à la direction d'appui. Le galet suiveur 60 présente une forme conique tronquée, de manière à présenter un côté sensiblement vertical sur le côté du galet suiveur 60 le plus proche de la manivelle. De cette manière, seule la partie la plus proche du décrochement du galet suiveur 60 est à proximité de la surface de travail.

Le chariot 16 comporte des moyens pour se déplacer latéralement. Lors du déplacement du chariot palpeur 16 selon la direction d'avance 15, le chariot 16 plaque le galet suiveur 60 contre la surface verticale du décrochement 52.

De cette manière, le galet 8 est constamment maintenu à une distance déterminée du décrochement 52.

De la même manière que la variante illustrée dans la figure 7, le galet suiveur 60 est automatiquement orienté par le galet 8 selon la normale à la surface.

Le galet 8 dans les figures 3 à 8 est essentiellement destiné à mesurer les surfaces planes selon une direction transversale à la direction d'avance 15. Ainsi, si la normale à la surface évolue en dehors du plan perpendiculaire à l'axe de pivotement 17, le galet ne mesurera pas cette composante de déclivité. Cependant, l'invention n'est pas limitée à la mesure de normale sur ce type de surface. En effet, selon une variante, le dispositif de mesure de normale peut mesurer la normale d'une surface selon trois dimensions.

Les figures 9 et 10 illustrent un tel dispositif.

Un tel dispositif de mesure comporte aussi un bras d'appui 6 qui plaque un galet 80. Le galet 80 comporte une surface de palpation 81 et une surface supérieure 82. Le bras d'appui 6 est relié avec le galet 80 par une rotule 84 positionnée à l'intérieur du galet 80. A cet effet, le bras d'appui 6 traverse la surface supérieure 82 en une ouverture 90 et s'étend au travers du galet dans un espace 89.

La surface de palpation 81 et la surface supérieure 82 présentent une forme de sphère partielle qui se coupent et se rejoignent en une arête 83. La surface de palpation 81 est excentrée par rapport au centre de la rotule. Ainsi, pour la même raison que les galets 8, lorsque le galet 80 est plaqué contre une surface par le bras d'appui 6, le galet 80 s'oriente automatiquement dans une direction normale à la surface au point de contact entre la surface de palpation 81 et la surface mesurée 7, l'orientation du galet 80 correspondant à la droite formée par le centre défini par la surface de palpation 81 et le centre de la rotule 84.

Une plaque de support carrée 87 est reliée de manière rigide au bras d'appui 6. Deux potentiomètres 85 sont fixés à la plaque rigide sur des paliers 91 et comportent chacun un arbre de mesure 86. Les deux arbres de mesure 86 s'étendent chacun le long d'un côté de la plaque de support carré 87 vers un palier commun 92 en un coin commun de la plaque de support carrée 87. Les arbres de mesure 86 roulent sur la surface supérieure 82. En effet, comme la surface supérieure 82 est centrée sur le centre de la rotule 84, les arbres de mesure 86 des potentiomètres 85 restent en contact avec la surface supérieure 82 lorsque le galet 80 pivote autour de la rotule 84. Ainsi, les arbres de mesure 86 permettent de mesurer, par l'intermédiaire des potentiomètres 85, la rotation du galet 80 selon deux axes de rotation 88 perpendiculaires. Ainsi, la direction du galet 80 et donc de la normale locale, peut être mesurée en trois dimensions.

L'invention n'est pas limitée à des galets comportant une surface cylindrique ou sphérique. En effet, la surface de palpation peut être une surface convexe quelconque, si celle-ci présente un point de contact d'équilibre unique correspondant au point de la surface de palpation le plus proche de la direction de pivotement.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications annexées.

L'usage du verbe «comporter», «comprendre» ou «inclure» et de ses formes conjuguées n'exclut pas la présence d'autres éléments ou d'autres étapes que ceux énoncés dans une revendication. L'usage de l'article indéfini « un » ou «une» pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif d'orientation pour orienter un organe palpeur (8, 80) par rapport au vecteur normal local d'une surface de travail (7), le dispositif comportant :
un bâti (4),
un élément de support mobile (6) lié au bâti et apte à coulisser dans une direction prédéterminée (13, 14) par rapport au bâti,
un organe palpeur apte à pivoter selon un axe de rotation (17) non parallèle à la direction prédéterminée par rapport à un point d'articulation (9, 84) de l'élément de support,
des moyens de pression (3) aptes à déplacer et générer un effort sur l'élément de support mobile dans ladite direction prédéterminée de manière à plaquer l'organe palpeur contre la surface de travail,
dans lequel l'organe palpeur comporte une surface de palpation externe (20, 81) convexe unique apte à être mise en contact avec la surface de travail, la surface de palpation présentant un unique point de contact d'équilibre, le point de contact d'équilibre étant le point sur la surface de palpation le plus proche du point d'articulation, le point d'articulation étant excentré par rapport au centre de courbure de la surface de palpation au niveau du point de contact d'équilibre.

2. Dispositif selon la revendication 1, dans lequel la surface de palpation présente une forme de révolution (20) autour d'un axe de révolution (12) parallèle à l'axe de rotation (17), l'axe de révolution étant espacé de l'axe de rotation.

3. Dispositif selon la revendication 2, dans lequel l'organe palpeur comporte
une manivelle (21) comprenant une première partie (23) liée de manière pivotante au point d'articulation de l'élément de support et définissant l'axe de rotation et une deuxième partie (24) parallèle à la première partie et décalée de la première partie pour définir l'axe de révolution, et
un galet présentant la surface de palpation, le galet étant apte à pivoter par rapport à la deuxième partie de la manivelle pour rouler sur la surface de travail.

4. Dispositif selon la revendication 1, dans lequel l'organe palpeur est apte à pivoter selon un second axe de rotation non parallèle à la direction prédéterminée par rapport au point d'articulation (84) de l'élément de support, le second axe de rotation étant perpendiculaire au premier axe de rotation.

5. Dispositif selon la revendication 4, dans lequel l'articulation entre l'organe palpeur et l'élément de support est une rotule (84).

6. Dispositif selon la revendication 4 ou 5, dans lequel la surface de palpation (81) est sensiblement de la forme d'une calotte sphérique présentant un centre espacé du point d'articulation (84).

7. Dispositif selon l'une des revendications 4 à 6, dans lequel le dispositif comporte en outre un premier élément de mesure d'angle (85) et un second élément de mesure d'angle (85) aptes chacun à mesurer un déplacement angulaire autour des premier et second axes de rotation respectifs de l'organe palpeur par rapport à une position de référence respective,
et dans lequel l'organe palpeur comporte une surface de mesure (82) de forme d'une seconde calotte sphérique centrée sur le point d'articulation,
les deux éléments de mesure d'angle comportant chacun une tige de mesure (86) présentant une surface de révolution cylindrique en contact avec la surface de mesure, chaque tige de mesure étant apte à pivoter selon un des axes de rotation lors de la rotation de l'organe palpeur.

8. Dispositif selon l'une des revendications précédentes, dans lequel la direction prédéterminée (13, 14) de coulissement de l'élément de support mobile est sensiblement perpendiculaire à la surface de travail.

9. Dispositif selon l'une des revendications précédentes, comportant en outre un rail de guidage (5) destiné à être agencé le long de la surface de travail, le bâti (4) étant monté de manière mobile sur le rail de guidage.

10. Dispositif selon la revendication 9, dans lequel le dispositif comporte en outre un organe suiveur (60) lié à l'organe palpeur, le bâti comportant des moyens de plaquage aptes à plaquer l'organe suiveur sur une surface de décrochement (52) séparant deux parties de la surface de travail, l'organe suiveur étant solidaire de l'organe palpeur (8) de manière à pivoter lors du pivotement de l'organe palpeur et de manière à maintenir l'organe palpeur à une distance prédéterminée de la surface de décrochement.

11. Dispositif selon la revendication 10, dans lequel le dispositif comporte des moyens pour déplacer l'organe de palpation selon la direction de coulissement (13, 14), une direction d'avance (15) et une direction de plaquage (70), chacune des direction d'avance et direction de placage étant perpendiculaire à la direction de coulissement, les moyens de placage étant aptes à plaquer l'organe suiveur selon la direction de plaquage et la direction d'avance étant perpendiculaire à la direction de placage.

12. Dispositif selon l'une des revendications précédentes, dans lequel le bâti comporte en outre un capteur de position apte à mesurer la distance entre le bâti et la surface de travail.

13. Dispositif selon l'une des revendications 1 à 12, comportant en outre un capteur de distance (95) apte à mesurer une distance par rapport à la surface de travail, le capteur (95) étant agencé en point du dispositif situé en amont du point de contact entre la surface de travail et la surface de palpation externe, selon une direction d'avance (15).

14. Dispositif selon l'une des revendications 1 à 13 comportant en outre un élément de mesure d'angle (85, 33) apte à mesurer un déplacement angulaire autour de l'axe de rotation de l'organe palpeur par rapport à une position de référence.

15. Dispositif selon la revendication 7 ou 14, dans lequel l'élément de mesure d'angle (33, 85) est choisi parmi les potentiomètres, les codeurs incrémentaux, les capteurs inductifs, les comparateurs et les capteurs de triangulation optique.

16. Dispositif selon la revendication 14 ou 15, dans lequel l'élément de mesure d'angle comporte un arbre entrainé en rotation par la rotation de l'organe palpeur autour de l'axe de rotation par l'intermédiaire d'un accouplement choisi dans le groupe comprenant les accouplements flexibles (39,40), les accouplements directs, les accouplements par trains d'engrenage (42,43), les accouplements par courroie crantée (44, 45) et les accouplements par système de balancier (45, 46, 47).

17. Dispositif selon la revendication 14, dans lequel l'élément de mesure d'angle comporte un télémètre (64, 68) agencé de manière à détecter la position d'une surface supérieure du galet (8) opposée à la surface de palpation dans le référentiel de l'élément de support mobile (6, 29).

18. Dispositif selon la revendication 14, dans lequel l'élément de mesure d'angle comporte une came (71) liée à l'organe palpeur pour pivoter solidairement avec l'organe palpeur selon l'axe de rotation (17) et un télémètre (64, 68) agencé de manière à détecter la position d'une surface (73) de la came dans le référentiel de l'élément de support mobile (6, 29).

19. Dispositif selon l'une des revendications 1 à 16, le dispositif comportant en outre un outil (55) de traitement de la surface de travail apte à pivoter autour de l'axe de rotation en fonction du pivotement de l'organe palpeur.

20. Dispositif selon la revendication 17, dans lequel l'organe palpeur (8) est uniquement apte à pivoter selon l'axe de rotation (17), la surface de palpation (20) présentant une forme de révolution autour d'un axe de révolution (12) parallèle à l'axe de rotation (17), l'axe de révolution étant espacé de l'axe de rotation, l'organe palpeur comportant une manivelle (21) comprenant une première partie (21) liée de manière pivotante au point d'articulation de l'élément de support et définissant l'axe de rotation et une deuxième partie parallèle à la première partie et décalée de la première partie pour définir l'axe de révolution, et dans lequel la première partie de la manivelle comporte un support et l'outil (56) de traitement est lié de manière solidaire au support (29) pour pivoter avec la manivelle.

## Patentansprüche

1. Ausrichtungsvorrichtung zum Ausrichten einer Sensorsonde (8, 80) in Bezug auf einen lokalen Normalvektor einer Arbeitsfläche (7), die Vorrichtung umfassend:
einen Rahmen (4),
ein mit dem Rahmen verbundenes, bewegliches Stützelement (6), dazu geeignet, in eine in Bezug auf den Rahmen vorgegebene Richtung (13, 14) verschoben zu werden,
eine Sensorsonde, dazu geeignet, sich nach einer Rotationsachse (17) zu drehen, wobei diese nicht parallel zur vorgegebenen Richtung in Bezug auf den Gelenkpunkt (9, 84) des Stützelementes ist,
Druckmittel (3), dazu geeignet, in der vorgegebenen Richtung eine Kraft auf das bewegliche Stützelement auszuüben, so dass die Sensorsonde gegen die Arbeitsfläche gedrückt wird,
wobei die Sensorsonde eine einzige äußere konvexe Sensorfläche (20, 81) umfasst, dazu geeignet, in Verbindung mit der Arbeitsfläche gebracht zu werden, wobei die Sensorfläche einen einzigen Gleichgewichtskontaktpunkt aufweist, wobei der Gleichgewichtskontaktpunkt der Punkt auf der Sensorfläche ist, der dem Gelenkpunkt am nächsten ist, wobei der Gelenkpunkt in Bezug auf den Krümmungsmittelpunkt der Sensorfläche auf Höhe des Gleichgewichtskontaktpunktes entlegen ist.

2. Vorrichtung gemäß Anspruch 1, wobei die Sensorfläche einen Drehkörper (20) um eine Umdrehungsachse (12) parallel zur Rotationsachse (17) aufweist, wobei die Umdrehungsachse von der Rotationsachse beabstandet ist.

3. Vorrichtung gemäß Anspruch 2, wobei die Sensorsonde umfasst:
eine Kurbel (21) umfassend einen ersten Teil (23), drehend verbunden mit dem Gelenkpunkt des Stützelementes und die Rotationsachse definierend, und eine zweiten Teil (24) parallel zum ersten Teil und versetzt zum ersten Teil, um die Umdrehungsachse zu definieren, und
eine die Sensorfläche aufweisende Rolle, dazu geeignet, sich um den zweiten Teil der Kurbel zu drehen, um auf der Arbeitsfläche zu rollen.

4. Vorrichtung gemäß Anspruch 1, wobei die Sensorsonde dazu geeignet ist, sich um eine zweite, nicht zur vorgegebenen Richtung in Bezug auf den Gelenkpunkt (84) des Stützelementes parallele Rotationsachse zu drehen, wobei die zweite Rotationsachse senkrecht zur ersten Rotationsachse ist.

5. Vorrichtung gemäß Anspruch 4, wobei das Gelenk zwischen der Sensorsonde und dem Stützelement ein Kugelgelenk (84) ist.

6. Vorrichtung gemäß Anspruch 4 oder 5, wobei die Sensorfläche (81) im Wesentlichen die Form einer kugelförmigen Kuppe und einen vom Gelenkpunkt (84) beabstandeten Mittelpunkt aufweist.

7. Vorrichtung gemäß einem der Ansprüche 4 bis 6, wobei die Vorrichtung unter anderem ein erstes Winkelmesselement (85) und ein zweites Winkelmesselement (85) umfasst, beide dazu geeignet, eine Winkelverlagerung um die jeweilige erste und zweite Rotationsaxe der Sensorsonde in Bezug auf eine jeweilige Referenzposition zu messen,
und wobei die Sensorsonde eine Messfläche (82) in Form einer zweiten, mittig am Gelenkpunkt angeordneten, kugelförmigen Kuppe umfasst,
wobei die zwei Winkelmesselemente jeder eine Messstab (86) umfassen, welcher eine zylindrische Drehfläche, die in Kontakt mit der Messfläche steht, aufweist, wobei jeder Messstab dazu geeignet ist, sich nach einer der Rotationsachsen anlässlich der Rotation der Sensorsonde zu drehen.

8. Vorrichtung gemäß einem der vorstehenden Ansprüche, wobei die vorgegebene Verschiebungsrichtung (13, 14) des beweglichen Stützelementes im Wesentlichen senkrecht zur Arbeitsfläche ist.

9. Vorrichtung gemäß einem der vorstehenden Ansprüche, umfassend unter anderem eine Führungsschiene, dazu bestimmt, entlang der Arbeitsfläche angeordnet zu werden, wobei der Rahmen (4) beweglich auf der Führungsschiene angebracht ist.

10. Vorrichtung gemäß Anspruch 9, wobei die Vorrichtung unter anderem ein mit der Sensorsonde verbundenes Nachstellmittel (60) umfasst, wobei der Rahmen ein Pressmittel umfasst, welche das Nachstellmittel auf eine abgestufte Fläche (52) drückt, welche die beiden Arbeitsflächen trennt, wobei das Nachstellmittel mit der Sensorsonde (8) fest verbunden ist, so dass es sich mit der Bewegung der Sensorsonde bewegt und die Sensorsonde in einem vorgegebenen Abstand zu der abgestuften Fläche hält.

11. Vorrichtung gemäß Anspruch 10, wobei die Vorrichtung ein Mittel zum Bewegen der Sensorsonde entsprechend der Verschiebungsrichtung (13, 14), einer Vorschubrichtung (15) und einer Pressrichtung (70) umfasst, wobei die Vorschubrichtung und die Pressrichtung senkrecht zur Verschiebungsrichtung sind, wobei das Pressmittel dazu geeignet ist, das Nachstellmittel entsprechend in die Vorschubrichtung zu drücken, und wobei die Vorschubrichtung senkrecht zur Pressrichtung ist.

12. Vorrichtung gemäß einem der vorstehenden Ansprüche, wobei der Rahmen unter anderem einen Positionssensor umfasst, dazu geeignet, die Entfernung zwischen dem Rahmen und der Arbeitsfläche zu messen.

13. Vorrichtung gemäß einem der Ansprüche 1 bis 12, umfassend unter anderem einen Entfernungssensor (95), dazu geeignet, eine Entfernung in Bezug auf die Arbeitsfläche zu messen, wobei der Sensor (95) an dem Punkt der Vorrichtung angeordnet ist, welcher in Vorschubrichtung (15) vor dem Kontaktpunkt zwischen der Arbeitsfläche und der äußeren Sensorfläche liegt.

14. Vorrichtung gemäß einem der Ansprüche 1 bis 13, umfassend weiterhin ein Winkelmesselement (85, 33), welches dazu geeignet ist, eine Winkelverlagerung um die Rotationsachse der Sensorsonde in Bezug auf eine Referenzposition zu messen.

15. Vorrichtung gemäß Anspruch 7 oder 14, wobei das Winkelmesselement (33, 85) ausgewählt ist aus einem Potentiometer, Inkrementalgeber, induktiven Sensoren, Komparatoren und optischen Tringulationssensoren.

16. Vorrichtung gemäß Anspruch 14 oder 15, wobei das Winkelmesselement eine durch die Rotation der Sensorsonde um die Rotationsachse mittel einer Kupplung rotierend antreibbare Welle umfasst, wobei die Kupplung ausgewählt werden kann aus der Gruppe umfassend flexible Kupplungen (39, 40), Direktkupplungen, Räderwerkkupplungen (42, 43), Zahnriemenkupplungen (44, 45) und Kupplungen mit Pendelsystem.

17. Vorrichtung gemäß Anspruch 14, wobei das Winkelmesssystem einen Entfernungsmesser (64, 68), so angeordnet, dass er die Position der oberen Fläche der Rolle gegenüberliegend zur Sensorfläche in dem Bezugssystem des beweglichen Stützelementes (6, 29) erfasst, umfasst.

18. Vorrichtung gemäß Anspruch 14, wobei das Winkelmesselement eine Nocke (71), verbunden mit der Sensorsonde, um sich fest verbunden mit der Sensorsonde gemäß der Rotationsachse (17) zu drehen, und einen Entfernungsmesser (64, 68), so angeordnet, dass er die Position einer Fläche (73) der Nocke in dem Bezugssystem des beweglichen Stützelementes (6, 29) registriert, umfasst.

19. Vorrichtung gemäß einem der Ansprüche 1 bis 16, wobei die Vorrichtung unter anderem ein Werkzeug (55) zur Bearbeitung der Arbeitsfläche umfasst, welches dazu geeignet ist, sich um die Rotationsachse entsprechend der Drehung der Sensorsonde zu drehen.

20. Vorrichtung gemäß Anspruch 17, wobei die Sensorsonde (8) ausschließlich dazu geeignet ist, sich gemäß der Rotationsachse (17) zu drehen, wobei die Sensorfläche (20) einen Drehkörper (20) um eine Umdrehungsachse (12) parallel zur Rotationsachse (17) aufweist, wobei die Umdrehungsachse von der Rotationsachse beabstandet ist, wobei die Sensorsonde eine Kurbel (21) umfasst, diese umfassend einen ersten Teil (23) drehend verbunden mit dem Gelenkpunkt des Stützelementes und die Rotationsachse definierend und eine zweiten Teil (24) parallel zum ersten Teil und versetzt zum ersten Teil, um die Umdrehungsachse zu definieren, und wobei der erste Teil der Kurbel eine Stütze umfasst und das Bearbeitungswerkzeug (56) fest verbunden mit der Stütze (29) ist, um sich mit der Kurbel zu drehen.

## Claims

1. An orientation device for orientating a sensor probe (8, 80) relative to the local normal vector of a work surface (7), the device comprising:
a frame (4),
a moving support element (6) linked to the frame and able to slide in a predetermined direction (13, 14) relative to the frame,
a sensor probe able to pivot on an axis of rotation (17) not parallel to the predetermined direction relative to a point of articulation (9, 84) of the support element, pressure means (3) able to move and generate a force on the moving support element in said predetermined direction so as to press the sensor probe against the work surface,
in which the sensor probe comprises a single convex external sensing surface (20, 81) able to be placed in contact with the work surface, the sensing surface having a single equilibrium contact point, the equilibrium contact point being the point on the sensing surface closest to the point of articulation, the point of articulation being off-center relative to the center of curvature of the sensing surface at the level of the equilibrium contact point.

2. The device as claimed in claim 1, in which the sensing surface has a form of revolution (20) about an axis of revolution (12) parallel to the axis of rotation (17), the axis of revolution being spaced apart from the axis of rotation.

3. The device as claimed in claim 2, in which the sensor probe comprises
a handle (21) comprising a first part (23) pivotably linked to the point of articulation of the support element and defining the axis of rotation and a second part (24) parallel to the first part and offset from the first part to define the axis of revolution, and
a roller having the sensing surface, the roller being able to pivot relative to the second part of the handle to roll on the work surface.

4. The device as claimed in claim 1, in which the sensor probe is able to pivot on a second axis of rotation not parallel to the predetermined direction relative to the point of articulation (84) of the support element, the second axis of rotation being at right angles to the first axis of rotation.

5. The device as claimed in claim 4, in which the articulation between the sensor probe and the support element is a ball joint (84).

6. The device as claimed in claim 4 or 5, in which the sensing surface (81) is substantially in the form of a spherical cap having a center spaced apart from the point of articulation (84).

7. The device as claimed in one of claims 4 to 6, in which the device also comprises a first angle measurement element (85) and a second angle measurement element (85) each able to measure an angular displacement about the first and second respective axes of rotation of the sensor probe relative to a respective reference position, and in which the sensor probe comprises a measurement surface (82) in the form of a second spherical cap centered on the point of articulation,
the two angle measurement elements each comprising a measurement rod (86) having a cylindrical surface of revolution in contact with the measurement surface, each measurement rod being able to pivot on one of the axes of rotation upon the rotation of the sensor probe.

8. The device as claimed in one of the preceding claims, in which the predetermined direction (13, 14) of sliding of the moving support element is substantially at right angles to the work surface.

9. The device as claimed in one of the preceding claims, also comprising a guiding rail (5) intended to be arranged along the work surface, the frame (4) being mounted so as to move on the guiding rail.

10. The device as claimed in claim 9, in which the device also comprises a follower member (60) linked to the sensor probe, the frame comprising pressing means suitable for pressing the follower member onto a setback surface (52) separating two parts of the work surface, the follower member being securely attached to the sensor probe (8) so as to pivot upon the pivoting of the sensor probe and so as to keep the sensor probe at a predetermined distance from the setback surface.

11. The device as claimed in claim 10, in which the device comprises means for moving the sensing probe in the sliding direction (13, 14), a direction of advance (15) and a pressing direction (70), the direction of advance and pressing direction each being at right angles to the sliding direction, the pressing means being suitable for pressing the follower member in the pressing direction and the direction of advance being at right angles to the pressing direction.

12. The device as claimed in one of the preceding claims, in which the frame also comprises a position sensor suitable for measuring the distance between the frame and the work surface.

13. The device as claimed in one of claims 1 to 12, also comprising a distance sensor (95) suitable for measuring a distance relative to the work surface, the sensor (95) being arranged at a point of the device situated upstream of the point of contact between the work surface and the external sensing surface, in a direction of advance (15).

14. The device as claimed in one of claims 1 to 13, also comprising an angle measurement element (85, 33) suitable for measuring an angular displacement about the axis of rotation of the sensor probe relative to a reference position.

15. The device as claimed in claim 7 or 14, in which the angle measurement element (33, 85) is chosen from potentiometers, incremental coders, inductive sensors, comparators and optical triangulation sensors.

16. The device as claimed in claim 14 or 15, in which the angle measurement element comprises a shaft driven in rotation by the rotation of the sensor probe about the axis of rotation via a coupling chosen from the group comprising flexible couplings (39,40), direct couplings, gear train couplings (42,43), notched belt couplings (44, 45) and rocker arm system couplings (45, 46, 47).

17. The device as claimed in claim 14, in which the angle measurement element comprises a range finder (64, 68) arranged in such a way as to detect the position of a top surface of the roller (8) opposite the sensing surface in the reference frame of the moving support element (6, 29).

18. The device as claimed in claim 14, in which the angle measurement element comprises a cam (71) linked to the sensor probe to pivot securely together with the sensor probe on the axis of rotation (17) and a range finder (64, 68) arranged in such a way as to detect the position of a surface (73) of the cam in the reference frame of the moving support element (6, 29).

19. The device as claimed in one of claims 1 to 16, the device also comprising a work surface treatment tool (55) capable of pivoting about the axis of rotation according to the pivoting of the sensor probe.

20. The device as claimed in claim 17, in which the sensor probe (8) is only able to pivot on the axis of rotation (17), the sensing surface (20) having a form of revolution about an axis of revolution (12) parallel to the axis of rotation (17), the axis of revolution being spaced apart from the axis of rotation, the sensor probe comprising a handle (21) comprising a first part (21) pivotably linked to the point of articulation of the support element and defining the axis of rotation and a second part parallel to the first part and offset from the first part to define the axis of revolution, and in which the first part of the handle comprises a support and the treatment tool (56) is securely linked to the support (29) to pivot with the handle.
